# EUROPÄISCHE PATENTSCHRIFT

(11) **EP 1 872 094 B1**
(45) Veröffentlichungstag und Bekanntmachung des Hinweises auf die Patenterteilung: **08.06.2016**
(21) Anmeldenummer: 06708474.9
(22) Anmeldetag: 23.02.2006
(51) Int. Cl.: G01F 1/698

(54) **VERFAHREN ZUM BETRIEB VON HEISSFILMLUFTMASSENMESSERN**
METHOD FOR OPERATING HOT-FILM AIR-FLOW SENSORS
PROCEDE DE FONCTIONNEMENT DE DEBITMETRES D'AIR A FILMS CHAUDS

(30) Priorität: 11.04.2005 DE 102005016447
(43) Veröffentlichungstag der Anmeldung: 02.01.2008
(73) Patentinhaber: ROBERT BOSCH GMBH, 70442 Stuttgart (DE)
(72) Erfinder: OPITZ, Bernhard, 71229 Leonberg (DE); KONZELMANN, Uwe, 71679 Asperg (DE); GMELIN, Christoph, 70597 Stuttgart (DE); PISON, Araceli, 70839 Gerlingen (DE)
(86) Internationale Anmeldenummer: PCT/EP2006/060214
(87) Internationale Veröffentlichungsnummer: WO 2006/108733

(56) Entgegenhaltungen:
- DE-C- 10 111 840
- US-A- 4 833 912
- US-A- 5 255 642
- US-A1- 2004 007 245

## Beschreibung

Die Erfindung betrifft ein Verfahren zum Betrieb von Heißfilmluftmassenmessern. Derartige Heißfilmluftmassenmesser werden insbesondere zur Messung von Luftmassen im Ansaugtrakt einer Verbrennungskraftmaschine eingesetzt. Insbesondere betrifft die Erfindung ein Verfahren, mittels dessen sich eine Ölkontamination von Heißfilmluflmasselunessern vermeiden lässt.

### Stand der Technik

Bei vielen Prozessen, beispielsweise auf dem Gebiet der Verfahrenstechnik, der Chemie oder dem Maschinenbau, muss definiert eine Gasmasse, insbesondere eine Luftmasse, zugeführt werden. Hierzu zählen insbesondere Verbrennungsprozesse, welche unter geregelten Bedingungen ablaufen. Ein wichtiges Beispiel ist dabei die Verbrennung von Kraftstoff in Verbrennungskraftmaschinen von Kraftfahrzeugen, insbesondere mit anschließender katalytischer Abgasreinigung. Zur Messung des Luftmassendurchsatzes werden dabei verschiedene Typen von Sensoren eingesetzt.

Ein aus dem Stand der Technik bekannter Sensortyp ist der so genannte Heißfilmluftmassenmesser (HFM), welcher beispielsweise in DE 196 01 791 A1 in einer Ausführungsform beschrieben ist. Bei derartigen Heißfilmluftmassenmessern wird üblicherweise eine dünne Sensormembran auf einen Sensorchip, beispielsweise einen Silizium-Sensorchip, aufgebracht. Auf der Sensörmembran ist typischerweise mindestens ein Heizwiderstand angeordnet, welcher von zwei oder mehr Temperaturmesswiderständen umgeben ist. In einem Luftstrom, welcher über die Membran geführt wird, ändert sich die Temperaturverteilung, was wiederum von den Temperaturmesswiderständen erfasst werden kann. Somit kann, z. B. aus der Widerstandsdifferenz der Temperaturmesswiderstände, ein Luftmassenstrom bestimmt werden. Verschiedene andere Variationen dieses Sensortyps sind aus dem Stand der Technik bekannt.

Eine beispielsweise aus DE 101 11 840 C2 bekannte Problematik bei diesem Typ von Sensoren besteht darin, dass häufig Kontaminationen des Sensorchips auftreten können, beispielsweise durch Öl. Der Sensorchip wird üblicherweise entweder direkt im Ansaugtrakt der Verbrennungskraftmaschine oder in einem Bypass zum Ansaugtrakt der Verbrennungskraftmaschine eingesetzt. Dabei kann sich bereits im Betrieb der Verbrennungskraftmaschine Öl auf dem Sensorchip und dabei insbesondere auf der Sensormembran niederschlagen. Dieser Ölniederschlag kann zu einer unerwünschten Messsignalbeeinflussung des Sensorchips führen, insbesondere da ein Ölfilm auf der Oberfläche des Sensorchips auf die Wärmeleitfähigkeit der Oberfläche einwirkt, was zu Verfälschungen der Messsignale führt.

Diese Ölkontamination tritt insbesondere beim oder kurz nach dem Abschalten der Verbrennungskraftmaschine, beispielsweise eines Dieselmotors, auf. Nach Abstellen der Verbrennungskraftmaschine baut sich ein in einem Kurbelgehäuse vorhandener Überdruck typischerweise über eine Kurbelgehäuseentlüftung in den Ansaugtrakt der Verbrennungskraftmaschine ab. Dabei wird häufig Öldampf bzw. Ölnebel mitgeführt, welcher sich im Ansauglrakt und damit auch am dort angeordneten (oder in einem entsprechenden Bypass angeordneten) Luftmassenmesser als Ölfilm niederschlagen kann.

Die DE 101 11 840 C2 schlägt daher einen Sensorchip vor, welcher ein Rahmenelement, beispielsweise aus Silizium, mit einer darauf aufgebrachten Membran aufweist. Auf der Membran sind verschiedene Metallbahnen angeordnet, welche als elektrische Heizer und/oder Messwiderstände fungieren, wodurch der Bereich der Membran einen Sensorbereich bildet. Weiterhin ist auf der Oberfläche des Sensorchips zusätzlich mindestens ein Zusatzheizer angeordnet, welcher elektrisch so erhitzt werden kann, dass im Bereich des Zusatzheizers im strömenden Medium Thermogradientenwirbel gebildet werden, welche zu Niederschlägen der Verschmutzungen in dem Bereich des Zusatzheizers abseits des Bereichs des Sensorbereichs führen.

Diese aus dem Stand der Technik bekannte Vorrichtung weist jedoch verschiedene Nachteile auf. Ein wesentlicher Nachteil besteht darin, dass in DE 101 11 840 C2 der Zusatzheizer in unmittelbarer Nähe oder gar auf der Sensormembran angeordnet ist. Dies ist bei der offenbarten Anordnung insbesondere dadurch bedingt, dass der Silizium-Sensorchip lediglich eine kleine Fläche aufweist, so dass eine beabstandete Anordnung von Zusatzheizer und Sensormembran technisch zu realisieren ist. Diese benachbarte Anordnung von Zusatzheizer und Sensormembran kann jedoch dazu führen, insbesondere bei starken Ölbelastungen, dass Öltröpfchen zurück auf die Sensormembran fließen und somit wiederum zu einer Verschmutzung der Sensormembran und einer damit verbundenen Änderung der Wärmeleitung und somit einer Signaldrift führen. Weiterhin besteht ein Nachteil der in der DE 101 11 840 C2 dargestellten Anordnung im so genannten Marangoni-Effekt, welcher in einer Ausbildung unterschiedlicher Oberflächenspannungen bei unterschiedlichen Temperaturen besteht. Ein Ölfilm weist relativ zur Luft in kaltem Zustand eine höhere Oberflächenspannung als in heißem Zustand auf. Liegt in einer Flüssigkeit ein thermischer Gradient vor, so führt der Marangoni-Effekt üblicherweise zu einer Fluidbewegung von wärmeren Zonen hin zu kälteren Zonen. Somit kann die in der DE 101 11 840 C2 beschriebene Anordnung sogar den Nachteil beinhalten, dass Öltröpfchen auf der Oberfläche des Sensorchips vom Zusatzheizer hin auf die Sensormembran gedrängt werden und somit die Verschmutzung der Sensormembran sogar erhöht anstatt verringert wird. Das Dokument US-A-2004/007245 offenbart ein Verfahren zum Betrieb von Heißfilmluftmassenmessern.

Ein weiterer Nachteil der aus dem Stand der Technik bekannten Anordnungen ist dadurch bedingt, dass die Hauptverschmutzung durch Öl, wie oben beschrieben, beim oder kurz nach dem Abschalten der Verbrennungskraftmaschine auftritt, da dann Ölnebel durch den Ansaugtrakt und den Bypass hin zum Heißfilmluftmassenmesser diffundieren und diesen verschmutzen. Die aus dem Stand der Technik bekannten Anordnungen berücksichtigen diesen besonderen Umstand nicht und weisen somit den Nachteil auf, dass unmittelbar nach dem Abschalten der Verbrennungskraftmaschine der Heißfilmluftmassenmesser stark mit Öl kontaminiert wird.

### Vorteile der Erfindung

Es wird daher ein Verfahren zum Betrieb eines Heißfilmluftmassenmessers zur Messung von Luftmassenströmen im Ansaugtrakt einer Verbrennungskraftmaschine vorgeschlagen, welches die Nachteile der aus dem Stand der Technik bekannten Vorrichtungen weitgehend ausgleicht und aus dem Stand der Technik bekannte Verfahren verbessert. Das erfindungsgemäße Verfahren ist insbesondere zur Messung von Luftmassenströmen im Ansaugtrakt von Verbrennungskraftmaschinen geeignet, kann jedoch auch zum Betrieb anderweitig genutzte Heißfilmluftmassenmesser eingesetzt werden.

Das Verfahren nutzt einen Heißfilmluflmassenmesser, welcher einen Sensorchip mit einem Sensorrahmen und einer Sensormembran mit mindestens einem Heizelement und mindestens zwei Temperatursensoren aufweist, wobei der Heißfilmluftmassenmesser weiterhin einen Chipträger zur Halterung des Sensorchips und mindestens ein zusätzliches Heizelement aufweist. Mittels dieses mindestens einen zusätzlichen Heizelements soll der Sensorchip aufheizbar sein. Bei dem erfindungsgemäßen Verfahren wird unmittelbar nach Abschalten der Verbrennungskraftmaschine das mindestens eine Heizelement auf eine niedrigere Heizleistung geschaltet, vorzugsweise abgeschaltet, und das mindestens eine zusätzliche Heizelement wird für eine vorgegebene Nachheizphase eingeschaltet. Vorzugsweise wird dabei der Sensorchip im Wesentlichen gleichmäßig erwärmt.

Das erfindungsgemäße Verfahren nutzt im Wesentlichen drei Effekte zur Vermeidung einer Ölkontamination, wobei diese physikalischen Effekte jedoch in der Praxis zusammenwirken. Zum einen wird der Effekt der so genannten Thermophorese genutzt. Bei der Thermophorese wird eine so genannte thermophoretische Kraft auf Partikel ausgeübt, welche bewirkt, dass kleine Partikel (Öl, Staub etc.) in einem Feld mit einem Temperaturgradienten von Bereichen höherer Temperatur weg in Bereiche mit niedrigerer Temperatur gedrängt werden. Durch die Aufheizung des Sensorchips wird die Luft in Chipnähe wärmer als die Luft, welche etwas weiter entfernt ist. Der dadurch entstehende Temperaturgradient über dem Sensorchip genügt, um beispielsweise bei Einsatz des Heißfilmluftmassenmessers im Ansaugtrakt einer Verbrennungskraftmaschine, die Benetzung des Sensorchips und insbesondere der Sensormembran mit Öltröpfchen weitgehend zu verhindern. Dieser Effekt wirkt jedoch nur, wenn Öl in Tröpfchenform vorliegt, d.h. als Aerosol und nicht als Dampf. Besonders wirksam ist dieser Effekt, wie oben beschrieben, wenn der gesamte Sensorchip gleichmäßig aufgeheizt wird.

Zweitens bewirkt eine Aufheizung des Sensorchips, insbesondere eine gleichförmige Aufheizung des Sensorchips, eine Verhinderung von Ölkondensation auf einer Oberfläche des Sensorchips, insbesondere auf der Sensormembran. Liegt das Öl als Öldampf vor, wird durch eine Erwärmung des Chips auf Temperaturen oberhalb der Lufttemperatur eine Kondensation von Öl an der Chipoberfläche verhindert, ähnlich dem Effekt des Beschlagens einer kalten Brille in feuchter Luft.

Ein dritter Effekt, welcher bei dem erfindungsgemäßen Verfahren ausgenutzt wird, besteht darin, dass Thermogradientenwirbel in den Gasen oberhalb des Chips an den Rand des Sensorchips gedrängt werden. Durch Heizen des Sensorchips entsteht am Rand des Sensorchips, insbesondere am Übergang zwischen dem Sensorchip und dem Chipträger, ein Temperaturgradient, welcher abhängig von der thermischen Anbindung des Sensorchips an den Chipträger ist. Dieser Temperaturgradient führt dazu, dass sich Temperaturgradientenwirbel, welche sich im Normalbetrieb insbesondere im Bereich der Ränder der Sensormembran bilden, nach außen, hin zu den Kanten des Sensorchips verlagern, was abhängig ist von der thermischen Anbindung des Sensorchips an dem Chipträge. Verunreinigungen, insbesondere Öl, welche in Tröpfchenform vorliegen und sich noch in der Luft befinden, werden dadurch bevorzugt an den Kanten des Sensorchips abgelagert, wo diese nicht zu einer Kennliniendrift des Heißfilmluftmassenmessers führen. Zudem wird die Luft über dem Messchip bei diesem Vorgang zusätzlich gereinigt.

Der Ölnebel tritt im Fahrzeug, insbesondere im Ansaugtrakt der Verbrennungskraftmaschine, in der Regel erst nach Beendigung des Betriebs der Verbrennungskraftmaschine auf. Im Moment des Abstellens der Verbrennungskraftmaschine entspannt sich die Luft im Kurbelgehäuse und entweicht über die Kurbelgehäuseentlüftung in den Ansaugtrakt. Am Einbauort des Luftmassemessers ist dann in der Regel (abhängig vom Fahrzeug) ein kurzer Temperaturanstieg, verbunden mit einer Rückströmung (entgegen einer Hauptströmungsrichtung), feststellbar.

Obwohl eine Heizung des Sensorchips auch während des Betriebs der Verbrennungskraflmaschine durchaus denkbar ist, reicht es aus, den Sensorchip erst unmittelbar nach Abstellen der Verbrennungskraftmaschine aufzuheizen. Dabei ist weniger die absolute Temperatur entscheidend, sondern eher die Geschwindigkeit, mit der dieses Aufheizen erfolgt. Es ist daher besonders bevorzugt, den Heizbetrieb des Sensorchips mittels des mindestens einen zusätzlichen Heizelements nach Abschalten der Verbrennungskraftmaschine unmittelbar zu starten, vorzugsweise nicht später als eine Sekunde nach Abschalten der Verbrennungskraftmaschine. Dabei sollte das Aufheizen vorzugsweise derart schnell erfolgen, dass zu Beginn der Nachheizphase innerhalb von fünf Sekunden der Sensorchip mittels des mindestens einen zusätzlichen Heizelements um mindestens 10°, vorzugsweise um mindestens 20° aufgeheizt wird. Insgesamt kann die Nachheizphase vorzugsweise zwischen fünf Sekunden und zehn Minuten, besonders bevorzugt zwischen fünf Sekunden und fünf Minuten und idealerweise zwischen zehn Sekunden und drei Minuten dauern. Dabei sollte das mindestens eine zusätzliche Heizelement den Sensorchip in der Nachheizphase auf eine Temperatur von mindestens 40°C, vorzugsweise von mindestens 60°C und besonders bevorzugt von mindestens 80°C aufheizen. Höhere Temperaturen erhöhen die Schutzwirkung vor Kontaminationen.

Da diese bevorzugten Temperaturen immer noch weit unterhalb der typischen Betriebstemperatur des Heißfilmluflmassenmessers von 200°C liegen, ist es besonders bevorzugt, wenn das Abschalten oder Herunterschalten des Heizelements der Sensormembran innerhalb einer Zeit von nicht mehr als drei Sekunden nach Abschalten der Verbrennungskraftmaschine, vorzugsweise innerhalb von nicht mehr als einer Sekunde und besonders bevorzugt gleichzeitig mit dem Abschalten der Verbrennungskraftmaschine durchgeführt wird. Auf diese Weise lassen sich am Übergang zwischen dem mindestens einen Heizelement der Sensormembran und der übrigen Fläche des Sensorchips Thermogradientenwirbel und somit Verunreinigungen durch Öltröpfchen vermeiden.

Vorzugsweise wird das mindestens eine zusätzliche Heizelement gleichzeitig mit dem Ausschälten bzw. Herunterschalten des mindestens einen Heizelements der Sensoimembran aufgeheizt. Beispielsweise kann das mindestens eine zusätzliche Heizelement mittels einer stufenförmigen Ansteuerung eingeschaltet werden.

Ein wesentlicher Vorteil des erfindungsgemäßen Verfahrens besteht neben einer Vermeidung von Ölkontamination in der Tatsache, dass im Betrieb des Heißfilmlunmassenmessers der thermische Haushalt des Sensorchips nicht gestört wird. Somit muss auch eine Auswertungsschaltung, welche die Signale des Heißfilmluflmassenmessers auswertet, vom Prinzip her nicht geändert werden.

### Zeichnung

Anhand der Zeichnung wird die Erfindung nachstehend näher erläutert.

Es zeigt:
- Figur 1: eine Draufsicht eines Heißfilmluflmassenmessers mit einem Sensorgehäuse, einem Sensorträger, einem Sensorchip und einem Bypasskanal;
- Figur 1A: eine Detaildarstellung eines im Ausführungsbeispiel gemäß Figur 1 verwendeten Chipträgers mit eingesetztem Sensorchip;
- Figur 2: eine schematische Darstellung des Strömungsverlaufs einer Strömungsmediums über einem konventionellen Sensorchip;
- Figur 3: einen Strömungsverlauf eines Strömungsmediums über einem erfindungsgemäß gleichförmig beheizten Sensorchip;
- Figur 4: eine schematische Darstellung des zeitlichen Verlaufs einer erfindungsgemäßen Heizung eines Heißfilmluflmassenmessers.

### Ausführungsbeispiele

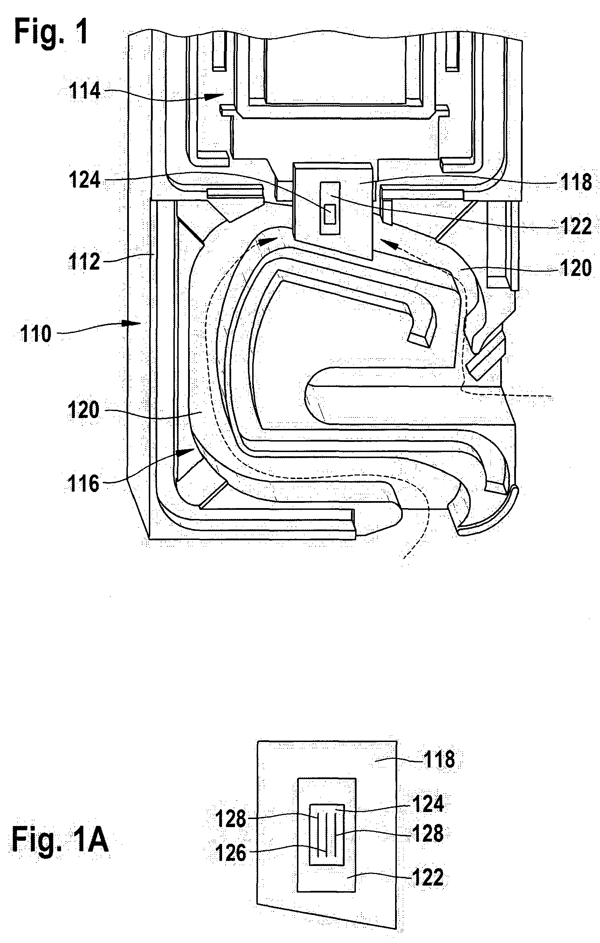

In Figur 1 ist ein Heißfilmluflmassenmesser 110 in Ansicht von oben dargestellt. Der Heißfilmluftmassenmesser 110 weist ein Gehäuse 112 auf, welches beispielsweise als Spritzgussbauteil ausgestaltet sein kann. Das Gehäuse 112 weist einen Elektronikbereich 114 und einen Kanalbereich 116 auf. Der Elektronikbereich 114 weist im Wesentlichen eine Aussparung zur Aufnahme eines Sensorgehäuses auf, welches jedoch in Figur 1 zur Vereinfachung nicht dargestellt ist. An das Sensorgehäuse angeformt (z. B. mittels eines Spitzgussverfahrens) ist ein als Sensornase 118 ausgeformter Chipträger 118, welcher in einen in den Analbereich 116 des Gehäuses 112 eingelassenen Bypasskanal 120 hineinragt. Der gesamte Heißfilmluftmassenmesser 110 wird so in einen Ansaugtrakt einer Verbrennungskraftmaschine eingebaut, dass Luft aus dem Ansaugtrakt durch den Bypasskanal 120 zum Chipträger 118 strömen kann.

In den Chipträger 118 ist ein Sensorchip 122 eingelassen, welcher einen aktiven Bereich in Form einer Membran 124 aufweist. Der Sensorchip 122 ist beispielsweise gemäß der oben beschriebenen, aus dem Stand der Technik bekannten Vorrichtung ausgestaltet und weist mindestens ein Heizelement 126 und mindestens zwei Temperatursensoren 128 auf der Membran 124 auf (siehe Detaildarstellung des Chipträgers 118 in Figur 1A). Die Funktionsweise derartiger Heißfilmluftmassenmesser 110 gemäß der Darstellung in Figur 1 und Figur 1A ist aus dem Stand der Technik bekannt.

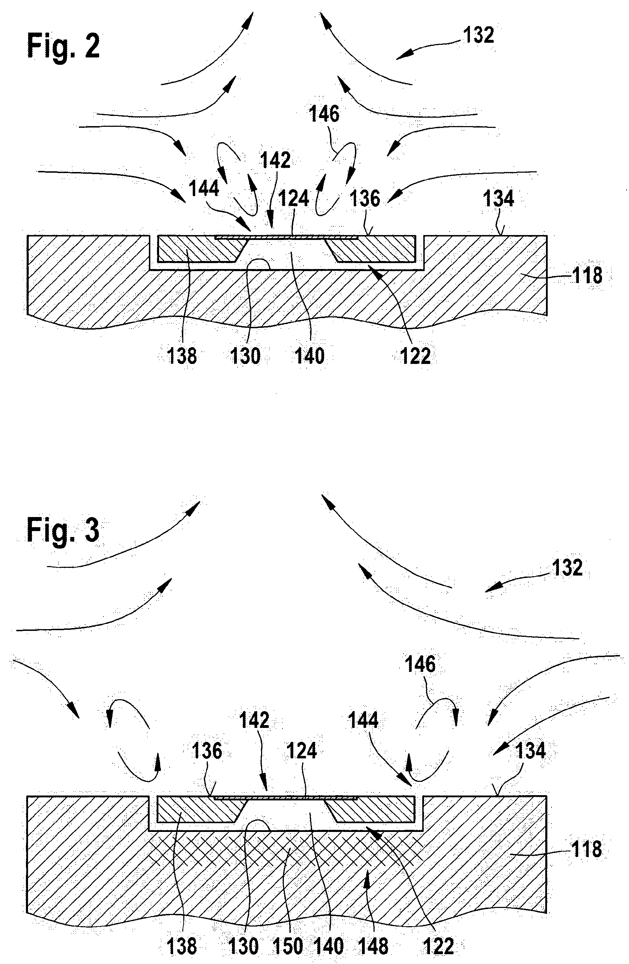

Wie oben bereits beschrieben, weisen herkömmliche Heißfilmluftmassenmesser 110 gemäß dem in Figur 1 dargestellten Aufbau jedoch Kontaminationsprobleme auf. Diese Kontaminationsprobleme hängen unter anderem mit der Ausbildung von Thermogradientenwirbeln zusammen. Dies soll anhand von Figur 2 und Figur 3 verdeutlicht werden. Beide Figuren zeigen eine Schnittdarstellung durch einen Chipträger 118. Der Chipträger 118 weist eine Vertiefung 130 auf, welche in eine einem Strömungsmedium zugewandte Oberfläche 134 des Chipträgers 118 eingelassen ist. Der Sensorchip 122 ist dabei derart in die Vertiefung 130 eingelassen, dass eine Sensoroberfläche 136 im Wesentlichen bündig mit der Oberfläche 134 des Chipträgers 118 abschließt. Der Sensorchip 122 weist einen Sensorrahmen 138 auf, welcher beispielsweise als Silizium-Bauteil ausgestaltet sein kann. Auf diesen Sensorrahmen 138 ist die Sensormembran 124 aufgespannt. Der Sensorrahmen 138 weist eine Öffnung 140 auf, in welchem die Sensormembran 124 im Wesentlichen als freitragender Film ausgestaltet ist. In diesem Bereich der Öffnung 140 ist auf der Sensoroberfläche 136 der aktive Bereich 142 des Sensorchips 122 ausgebildet, wobei innerhalb dieses aktiven Bereichs 142 das Heizelement 126 und die Temperatursensoren 128 (welche in den Figuren 2 und 3 nicht dargestellt sind) auf der Sensoroberfläche 136 angeordnet sind.

Der Heißfilmluftmassenmesser 110 wird üblicherweise dahingehend betrieben, dass das Heizelement 126 auf ca. 200°C aufgeheizt wird. Somit herrschen also im Betrieb im aktiven Bereich 142 des Sensorchips 122 Temperaturen dieser Größenordnung. An der Grenze zwischen dem aktiven Bereich 142 und dem Sensorrahmen 138, welcher üblicherweise eine Temperatur von ca. 20-30°C im Betrieb aufweist, bildet sich somit ein starker Temperaturgradient. Dementsprechend bilden sich im Strömungsmedium 132 in diesem Übergangsbereich Thermogradientenwirbel 146 aus. Im Bereich dieser Thermogradientenwirbel 146 bildet sich somit auf der Sensoroberfläche 136 ein Ölablagerungsbereich 144 aus, in welchem sich Öltröpfchen oder Ölnebel aus dem Strömungsmedium 132 bevorzugt niederschlagen.

In dem in Figur 2 dargestellten, dem Stand der Technik entsprechenden Ausführungsbeispiel wird der Sensorchip 122 nicht zusätzlich beheizt oder lediglich im Bereich der Sensormembran 124, wie beispielsweise in der DE 101 11 840 C2 beschrieben. Im Gegensatz dazu ist in Figur 3 ein erfindungsgemäßes Ausführungsbeispiel dargestellt, bei welchem der Sensorchip 122 über eine in Figur 3 symbolisch angedeutete Heizzone 148 mittels eines zusätzlichen Heizelements 150 beheizt wird. Erfindungsgemäß ist es dabei von Vorteil, wenn die Heizzone 148 so ausgestaltet ist, dass der Sensorchip gleichförmig beheizt wird. Vorteilhafterweise betragen dabei die Abweichungen der Temperaturen auf der Sensoroberfläche 136 nicht mehr als 20 Prozent.

Um dies zu erreichen kann die Heizzone 148 verschiedenartig ausgestaltet sein. Die Heizzone 148 kann beispielsweise, wie in Figur 3 dargestellt, in den Chipträger 118 eingelassen sein, beispielsweise in Form eines in den Chipträger 118 integrierten zusätzlichen Heizelements 150. Alternativ oder zusätzlich kann auch ein zusätzliches Heizelement 150 auf der Sensoroberfläche 136 eingesetzt werden, wobei dieses zusätzliche Heizelement 150 die gesamte Sensoroberfläche 136 vorzugsweise großflächig und gleichförmig aufheizt - vorzugsweise nicht nur die Membran 124. Beispielsweise können zu diesem Zweck zusätzliche Heizelemente 150 in Form von z. B. Heizbahnen, auf die Sensoroberfläche 136 aufgebracht werden. Auch ins Innere des Sensorchips; 122, beispielsweise ins Innere des Sensorrahmens 138, können zusätzliche Heizelemente 150 aufgenommen sein. Die zusätzlichen Heizelemente 150 sind in Figur 3 nur symbolisch dargestellt.

Erfindungsgemäß ist in der Ausgestaltung gemäß Figur 3 die Heizzone 148 so ausgestaltet, dass mittels dieser Heizzone 148 der Sensorchip 122 im Wesentlichen homogen aufgeheizt werden kann. Hierbei hat sich in Versuchen eine Aufheizung des Sensorchips 122 (d. h. insbesondere der Sensoroberfläche 136) auf eine Temperatur von mindestens 40° C bis 60°, vorzugsweise höher (beispielsweise 80°C bis 90°C), bewährt. Dadurch werden, wie in Figur 3 gezeigt, die Thermogradientenwirbel 146 von der aktiven Fläche 142 weg hin zum Rand des Sensorchips 122 gedrängt, so dass ein teilchenfreier Raum oberhalb des Sensorchips 122 aufgrund der Wirkung der Thermophorese entsteht. Somit verschiebt sich auch der Ölablagerungsbereich 144 weg von der aktiven Fläche 142 hin zum Rand des Sensorchips 122 und zum Übergangsbereich zwischen Sensorchip 122 und Chipträger 118.

Das zusätzliche Heizelement kann, wie in Figur 3 dargestellt, in den Chipträger 118 unterhalb des Sensorchips 122 integriert sein. Wird das zusätzliche Heizelement 150 z.B. flächig ausgebildet, so lässt sich damit eine gleichmäßige Erwärmung des Sensorchips 122 erreichen. Es ist selbstverständlich auch möglich, das zusätzliche Heizelement 150 als Teil des Sensorchips 122 auszubilden. In diesem Falle stellen der Sensorchip 122 und das zusätzliche Heizelement 150 ein Bauteil dar. Daneben kann das mindestens eine zusätzliche Heizelement 150 auch mehrere Heizwiderstände umfassen, welche Bestandteile des Sensorchips 122 sind oder die auf die Oberseite des Sensorchips 122 aufgebracht sind.

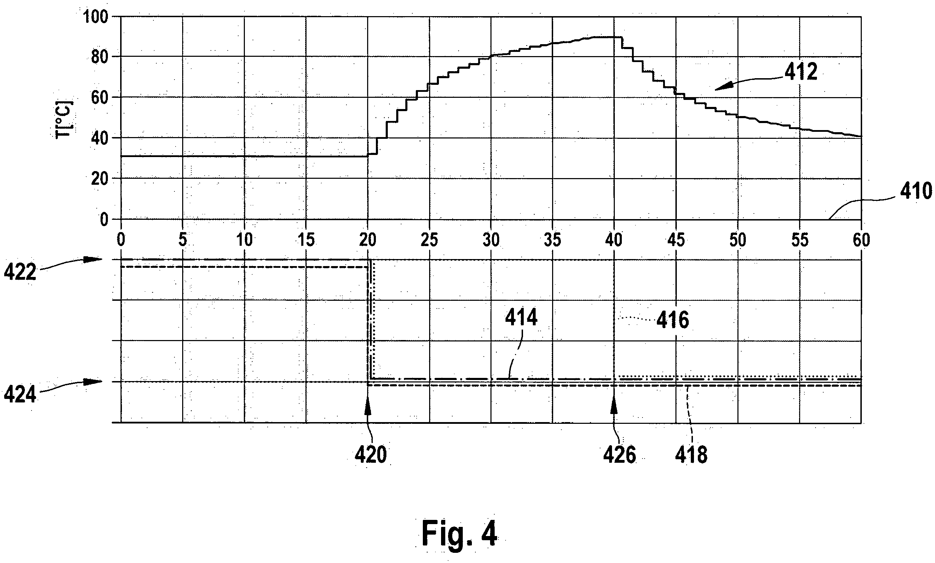

Erfindungsgemäß soll unmittelbar nach Abschalten der Verbrennungskraftmaschine das mindestens eine Heizelement 126 des Heißfilmluflmassenmessers 110 abgeschaltet werden. In Figur 4 ist ein Ausführungsbeispiel eines möglichen Zeitverlaufs eines Betriebs eines Heißfilmluftmassenmessers 110 dargestellt. Dabei stellt die Abszisse 410 die Zeit in Sekunden dar. Im oberen Bereich in Figur 4 ist die Chiptemperatur 412 in Grad Celsius aufgetragen. Im unteren Bereich in Figur 4 sind die Zeitverläufe der Schaltzustände des Heißfilmluflmassenmessers (Kurve 414), der Chipheizung (Kurve 416) und der Verbrennungskraftmaschine (Kurve 418) aufgetragen.

Zu einem ersten Zeitpunkt 420 wird, wie in Figur 4 im unteren Teil dargestellt, die Verbrennungskraftmaschine abgeschaltet. Dieser Zeitpunkt 420 liegt hier willkürlich bei 20 Sekunden. Die Verbrennungskraftmaschine schaltet somit von einem ersten Schaltzustand 422 ("Ein") in den Schaltzustand 424 ("Aus"), wie hier in Figur 4 anhand einer Stufe in dem Schaltzustand 418 der Verbrennungskraftmaschine dargestellt. Gleichzeitig oder unmittelbar danach wird das Heizelement 126 des Sensorchips 122 abgeschaltet, d.h. vom Schaltzustand "Ein" (Bezugsziffer 422) in den Schaltzustand "Aus" (Bezugsziffer 424) überführt. Dies ist in Figur im unteren Teil durch eine Stufe der Schaltzustandsfunktion 414 des Heißfilmluftmassenmessers 110 dargestellt. Auch ein Überführen in einen Zwischenzustand, beispielsweise einen leicht geheizten Zustand, also ein nicht vollständiges Abschalten, ist denkbar. Gleichzeitig wird, wie durch die positive Flanke zum Zeitpunkt 420 in der Schaltzustandsfunktion 416 der Chipheizung verdeutlicht, das zusätzliche Heizelement 150 des Sensorchips 122 eingeschaltet, um den Sensorchip 122 kontinuierlich aufzuheizen. Dabei steigt die Temperatur 412 des Sensorchips 122 (vgl. oberer Teil der Figur 4) langsam, ausgehend von einer Betriebstemperatur von ca. 30°C aus, an und erreicht schließlich eine Temperatur von ca. 90°C. Zu einem zweiten Zeitpunkt 426, welcher in diesem Ausführungsbeispiel zwanzig Sekunden nach dem ersten Zeitpunkt 420, zu welchem die Verbrennungskraftmaschine abgeschaltet wurde, liegt, wird auch das zusätzliche Heizelement 150 abgeschaltet. Die Dauer der Nachheizphase beträgt in diesem Ausführungsbeispiel also 20 Sekunden. Infolgedessen sinkt die Chiptemperatur 412, ausgehend von den erreichten 90°C, langsam wieder ab und nähert sich der Betriebstemperatur von ca. 30°C asymptotisch an.

Mittels des in Figur 4 dargestellten, bevorzugten Zeitschemas zum Betrieb eines Heißfilmluftmassenmessers 110 lassen sich Ölfilmniederschläge auf Heißfilmluftmassenmessern in Verbrennungskraflmaschinen weitgehend vermeiden. Dabei wird durch die Nachheizphase von in diesem Ausführungsbeispiel zwanzig Sekunden unter Ausnutzung der oben genannten Effekte (Thermoporese, Verhinderung von Kondensation, Verlagerung von Thermogradientenwirbeln 146 an den Rand des Sensorchips 122) ein Niederschlag von Öl auf der Sensoroberfläche 136 weitgehend vermieden.

Die Schaltung des mindestens einen zusätzlichen Heizelements 150 kann durch einen externen Schalter in einem Motorsteuergerät oder einem in den Heißfilmluflmassenmesser 110 integrierten Schalter (IC) ausgelöst werden.

**Bezugszeichenliste**

| | | | |
|---|---|---|---|
| 110 | Heißfilmluftmassenmesser | 420 | Abschalten Verbrennungskraftmaschine |
| 112 | Gehäuse | 422 | Schaltzustand "Ein" |
| 114 | Elektronikbereich | 424 | Schaltzustand "Aus" |
| 116 | Kanalbereich | | |
| 118 | Chipträger | | |
| 120 | Bypasskanal | | |
| 122 | Sensorchip | | |
| 124 | Membran | | |
| 126 | Heizelement | | |
| 128 | Temperatursensoren | | |
| 130 | Vertiefung | | |
| 132 | Strömungsmedium | | |
| 134 | dem Strömungsmedium zugewandte Oberfläche | | |
| 136 | Sensoroberfläche | | |
| 138 | Sensorrahmen | | |
| 140 | Öffnung | | |
| 142 | aktiver Bereich | | |
| 144 | Ölablagerungsbereich | | |
| 146 | Thermogradientenwirbel | | |
| 148 | Heizzone | | |
| 150 | Zusätzliches Heizelement | | |
| | | | |
| 410 | Abszisse, Zeit | | |
| 412 | Chiptemperatur | | |
| 414 | Schaltzustand Heißfilmluftmassenmesser | | |
| 416 | Schaltzustand Chipheizung | | |
| 418 | Schaltzustand Verbrennungskraftmaschine | | |

## Patentansprüche

1. Verfahren zum Betrieb eines Heißfilmluftmassenmessers (110) zur Messung von Luftmassenströmen im Ansaugtrakt einer Verbrennungskraftmaschine, wobei der Heißfilmluftmassenmesser (110) einen Sensorchips (122) mit einem Sensorrahmen (138) und einer Sensormembran (124) mit mindestens einem Heizelement (126) und mindestens zwei Temperatursensoren (128), einen Chipträger (118) zur Halterung des Sensorchips (122) aufweist und der Heißfilmluftmassenmesser (110) mindestens ein zusätzliches Heizelement (150) umfasst, wobei mittels des mindestens einen zusätzlichen Heizelements (150) der Sensorchip (122) aufheizbar ist und das mindestens eine zusätzliche Heizelement (150) für eine vorgegebene Nachheizphase unmittelbar nach Abschalten der Verbrennungskraftmaschine eingeschaltet wird, **dadurch gekennzeichnet, dass**
a) unmittelbar nach Abschalten der Verbrennungskraftmaschine das mindestens eine Heizelement (126) der Sensormembran (124) abgeschaltet oder auf eine niedrigere Heizleistung geschaltet wird; und
b) das mindestens eine zusätzliche Heizelement (150) den Sensorchip (122) in der Nachheizphase im Wesentlichen gleichmäßig erwärmt und dabei auf eine Temperatur von mindestens 40° C aufheizt.

2. Verfahren gemäß dem vorhergchenden Anspruch, **dadurch gekennzeichnet, dass** Verfahrensschritt a) innerhalb einer Zeit von nicht mehr als 3 Sekunden nach, vorzugsweise von nicht mehr als 1 Sekunde nach und besonders bevorzugt gleichzeitig mit dem Abschalten der Verbrennungskraftmaschine durchgeführt wird.

3. Verfahren gemäß einem der vorhergehenden Ansprüche, **dadurch gekennzeichnet, dass** Verfahrensschritt b) nicht später als 3 Sekunden nach Abschalten der Verbrennungskraftmaschine, vorzugsweise nicht mehr als 1 Sekunde nach Abschalten der Verbrennungskraftmaschine und besonders bevorzugt gleichzeitig mit dem Abschalten der Verbrennungskraftmaschine gestartet wird.

4. Verfahren gemäß einem der vorhergehenden Ansprüche, **dadurch gekennzeichnet, dass** die Nachheizphase eine Zeitdauer zwischen 5 Sekunden und 10 Minuten, vorzugsweise zwischen 5 Sekunden und 5 Minuten und besonders bevorzugt zwischen 10 Sekunden und 3 Minuten aufweist.

5. Verfahren gemäß einem der vorhergehenden Ansprüche, **dadurch gekennzeichnet, dass** das mindestens eine zusätzliche Heizelement (150) den Sensorchip (122) in der Nachheizphase auf eine Temperatur von mindestens 60° C und besonders bevorzugt von mindestens 80° C aufheizt.

6. Verfahren gemäß einem der vorhergehenden Ansprüche, **dadurch gekennzeichnet, dass** das mindestens eine zusätzliche Heizelement (150) den Sensorchip (122) zu Beginn der Nachheizphase innerhalb von 5 Sekunden um mindestens 10° C, vorzugsweise um mindestens 20° C aufheizt.

7. Verfahren gemäß einem der vorhergehenden Ansprüche, **dadurch gekennzeichnet, dass** das minbestens eine zusätzliche Heizelement (150) während des Betriebes der Verbrennungskraftmaschine ausgeschaltet ist.

8. Verfahren gemäß einem der vorhergehenden Ansprüche, **dadurch gekennzeichnet, dass** das Einschalten des mindestens einen zusätzlichen Heizelements (150) in Verfahrensschritt b) mittels einer stufenförmigen Ansteuerung des mindestens einen zusätzlichen Heizelements (150) erfolgt.

## Claims

1. Method for operating a hot-film air mass flow sensor (110) for measuring air mass flows in the intake section of an internal combustion engine, wherein the hot-film air mass flow sensor (110) has a sensor chip (122) having a sensor frame (138) and a sensor diaphragm (124) with at least one heating element (126) and at least two temperature sensors (128), a chip carrier (118) for holding the sensor chip (122) and the hot-film air mass flow sensor (110) comprises at least one additional heating element (150), wherein the sensor chip (122) can be heated by means of the at least one additional heating element (150), and the at least one additional heating element (150) is switched on for a predefined post-heating phase immediately after the switching off of the internal combustion engine, **characterized in that**
a) immediately after the switching off of the internal combustion engine, the at least one heating element (126) of the sensor diaphragm (124) is switched off or is switched to a relatively low heating power; and
b) the at least one additional heating element (150) raises the temperature of the sensor chip (122) essentially uniformly in the post-heating phase and in the process heats to a temperature of at least 40°C.

2. Method according to the preceding claim, **characterized in that** method step a) is carried out within a time of not more than 3 seconds after, preferably not more than 1 second after and particularly preferably at the same time as, the switching off of the internal combustion engine.

3. Method according to one of the preceding claims, **characterized in that** method step b) is started not later than 3 seconds after the switching off of the internal combustion engine, preferably not more than 1 second after the switching off of the internal combustion engine and particularly preferably at the same time as the switching off of the internal combustion engine.

4. Method according to one of the preceding claims, **characterized in that** the post-heating phase has a time period between 5 seconds and 10 minutes, preferably between 5 seconds and 5 minutes and particularly preferably between 10 seconds and 3 minutes.

5. Method according to one of the preceding claims, **characterized in that** the at least one additional heating element (150) heats the sensor chip (122) to a temperature of at least 60°C, and particularly preferably at least 80°C, in the post-heating phase.

6. Method according to one of the preceding claims, **characterized in that** the at least one additional heating element (150) heats the sensor chip (122) by at least 10°C, preferably by at least 20°C within 5 seconds at the start of the post-heating phase.

7. Method according to one of the preceding claims, **characterized in that** the at least one additional heating element (150) is switched off during the operation of the internal combustion engine.

8. Method according to one of the preceding claims, **characterized in that** the at least one additional heating element (150) is switched on in method step b) by means of stepped actuation of the at least one additional heating element (150).

## Revendications

1. Procédé pour faire fonctionner un débitmètre d'air à film chaud (110) destiné. à mesurer des débits massiques d'air dans le système d'admission d'un moteur à combustion interne, le débitmètre d'air à film chaud (110) possédant une puce de capteur (122) dotée d'un cadre de capteur (138) et une membrane de capteur (124) dotée d'au moins un élément chauffant (126) et au moins deux capteurs de température (128), un porte-puce (118) destiné à maintenir la puce de capteur (122) et le débitmètre d'air à film chaud (110) comprenant au moins un élément chauffant (150) supplémentaire, la puce de capteur (122) pouvant être chauffée au moyen dudit élément chauffant (150) supplémentaire et ledit élément chauffant (150) supplémentaire étant mis en circuit pendant une phase de post-chauffage prédéfinie immédiatement après l'arrêt du moteur à combustion interne, **caractérisé en ce que**
a) immédiatement après l'arrêt du moteur à combustion interne, l'au moins un élément chauffant (126) de la membrane de capteur (124) est mis hors circuit ou commuté à une puissance de chauffe plus faible ; et
b) l'au moins un élément chauffant (150) supplémentaire chauffe la puce de capteur (122) de manière sensiblement homogène dans la phase de post-chauffage et chauffe ici à une température d'au moins 40 °C.

2. Procédé selon la revendication précédente, **caractérisé en ce que** l'étape a) est exécutée dans un délai maximum de 3 secondes après, de préférence dans un délai maximum de 1 seconde après et particulièrement de préférence simultanément avec l'arrêt du moteur à combustion interne.

3. Procédé selon l'une des revendications précédentes, **caractérisé en ce que** l'étape b) est démarrée pas plus tard que 3 secondes après l'arrêt du moteur à combustion interne, de préférence pas plus tard que 1 seconde après l'arrêt du moteur à combustion interne et particulièrement de préférence simultanément avec l'arrêt du moteur à combustion interne.

4. Procédé selon l'une des revendications précédentes, **caractérisé en ce que** la phase de post-chauffage présente une durée entre 5 secondes et 10 minutes, de préférence entre 5 secondes et 5 minutes et particulièrement de préférence entre 10 secondes et 3 minutes.

5. Procédé selon l'une des revendications précédentes, **caractérisé en ce que** l'au moins un élément chauffant (150) supplémentaire chauffe la puce de capteur (122) dans la phase de post-chauffage à une température d'au moins 60 °C et particulièrement de préférence d'au moins 80 °C.

6. Procédé selon l'une des revendications précédentes, **caractérisé en ce que** l'au moins un élément chauffant (150) supplémentaire chauffe la puce de capteur (122) au début de la phase de post-chauffage dans un délai de 5 secondes d'au moins 10 °C et particulièrement de préférence d'au moins 20 °C.

7. Procédé selon l'une des revendications précédentes, **caractérisé en ce que** l'au moins un élément chauffant (150) supplémentaire est mis hors circuit pendant le fonctionnement du moteur à combustion interne.

8. Procédé selon l'une des revendications précédentes, **caractérisé en ce que** la mise en circuit de l'au moins un élément chauffant (150) supplémentaire à l'étape b) s'effectue au moyen d'une commande par paliers dudit élément chauffant (150) supplémentaire.
